(19) Europäisches Patentamt
European Patent Office
Office européen des brevets

(11) **EP 3 539 207 B1**

(12) **EUROPÄISCHE PATENTSCHRIFT**

(45) Veröffentlichungstag und Bekanntmachung des Hinweises auf die Patenterteilung:
**11.03.2020  Patentblatt 2020/11**

(21) Anmeldenummer: **18710875.8**

(22) Anmeldetag: **16.03.2018**

(51) Int Cl.:
*H02M 7/02* *(2006.01)*    *H01F 38/08* *(2006.01)*

(86) Internationale Anmeldenummer:
**PCT/EP2018/056615**

(87) Internationale Veröffentlichungsnummer:
**WO 2018/167249 (20.09.2018 Gazette 2018/38)**

(54) **SCHWEISSSTROMQUELLE**

WELDING CURRENT SOURCE

SOURCE DE COURANT DE SOUDAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.03.2017  EP 17161498**

(43) Veröffentlichungstag der Anmeldung:
**18.09.2019  Patentblatt 2019/38**

(73) Patentinhaber: **Fronius International GmbH 4643 Pettenbach (AT)**

(72) Erfinder:
• **PRINZ, Andreas**
  **4643 Pettenbach (AT)**
• **MÜHLBERGER, Michael**
  **4643 Pettenbach (AT)**

(74) Vertreter: **Sonn & Partner Patentanwälte Riemergasse 14 1010 Wien (AT)**

(56) Entgegenhaltungen:
DE-B- 1 189 199    US-A- 4 897 522
US-A- 4 897 773    US-A1- 2004 119 572

**Beschreibung**

Die Erfindung betrifft eine Schweißstromquelle zur Bereitstellung eines Schweißstroms und einer Schweißspannung an einem Ausgang für die Durchführung eines Lichtbogenschweißverfahrens, mit einem eingangsseitigen Gleichrichter, einem mit einer Schaltfrequenz betriebenen Inverter, einem Transformator mit einer Primärwicklung und zumindest zwei Sekundärwicklungen, zumindest zwei zwischen den Sekundärwicklungen und dem Ausgang angeordneten Gleichrichtern, und zumindest einer Kapazität und einem Belastungswiderstand am Ausgang.

Übliche Schweißstromquellen mit Inverter weisen einen eingangsseitigen Gleichrichter auf, der die Eingangswechselspannung zu einer Zwischenkreisspannung gleichrichtet. Diese wird mittels eines Inverters in eine hochfrequente Wechselspannung einer definierten Schaltfrequenz umgewandelt, über einen Transformator an dessen Sekundärseite übertragen und mit einem weiteren, sekundärseitigen Gleichrichter gleichgerichtet und dem Ausgang der Schweißstromquelle zugeführt. Durch das Windungsverhältnis Primärwicklung zu Sekundärwicklung wird die Stromstärke auf der Sekundärseite des Transformators auf die zum Schweißen notwendig hohen Ströme im Bereich mehrerer 100A angehoben. Um unerwünschte Störsignale in der Ausgangsspannung bzw. im Ausgangsstrom zu dämpfen sind am Ausgang oft eine Kapazität und ein Belastungswiderstand angeordnet. Übliche Ausgangsspannungen der Sekundärwicklung liegen im Bereich zwischen 30V und 70V, was ausreichend ist, einen einmal gezündeten Lichtbogen aufrecht zu erhalten. Zum Zünden des Lichtbogens bzw. für einen stabilen Lichtbogen bei Stromstärken kleiner 20A wird aber eine höhere Ausgangsspannung auf der Sekundärseite benötigt. Auch bei dynamischen Anforderungen des Schweißprozess, beispielsweise durch eine veränderte Lichtbogenlänge hervorgerufen, kann eine höhere Ausgangsspannung einen stabileren Lichtbogen gewährleisten.

Der Stand der Technik zeigt einige Möglichkeiten zur Erreichung dieser höheren Ausgangsspannung auf der Sekundärseite. Beispielsweise kann dies mit bekannten Spannungsverdopplungsschaltungen oder Schaltnetzteilen erreicht werden, was aber mit zusätzlichem Bauteilaufwand verbunden ist. Auch ist aus der US 2004/119572 A1 bekannt, mit einer als Tertiärwicklung bezeichneten zweiten Sekundärwicklung am Transformator eine höhere Ausgangsspannung bei kleineren Strömen zu erzielen. Dabei weist die zweite Sekundärwicklung ein zur ersten Sekundärwicklung unterschiedliches Übersetzungsverhältnis sowie eine höhere Streuinduktivität auf, sodass die Spannung am Ausgang der zweiten Sekundärwicklung bei höheren Strömen einbricht. Die höhere Streuinduktivität der zweiten Sekundärwicklung ist allerdings mit konstruktiv aufwendigen Lösungen verbunden. Außerdem ist der mit der zweiten Sekundärwicklung erzielbare Spannungsbereich, der sich aufgrund der ganzzahligen Windungszahlen erreichen lässt, sehr eingeschränkt. Die erste Sekundärwicklung hat zur Erreichung des großen Stromübersetzungsverhältnisses eine sehr kleine Windungszahl, oft sogar nur eine Windung. Dementsprechend muss die zweite Sekundärwicklung zumindest zwei Windungen aufweisen und hat damit die doppelte Ausgangsspannung wie die erste Sekundärwicklung. Eine dritte Windung und damit die dreifache Ausgangsspannung würde meist die aufgrund von Sicherheitsvorschriften vorgegebenen Höchstwerte der Ausgangsspannung überschreiten. Aktuell beträgt die dauerhaft zugelassene maximale Spannung am Ausgang einer Schweißstromquelle 113V DC.

Der Erfindung liegt somit die Aufgabe zugrunde, ausgehend vom eingangs geschilderten Stand der Technik, eine Schweißstromquelle zu schaffen, die eine möglichst hohe Ausgangsspannung im Leerlauf bereitstellt, um ein sicheres Zünden des Lichtbogens zu gewährleisten, wobei der Aufwand für zusätzliche Bauteile möglichst gering gehalten werden soll. Dabei soll die Ausgangsspannung im Leerlauf aber dennoch unter der von den Sicherheitsvorschriften vorgegebenen maximalen Ausgangsspannung liegen.

Die Erfindung löst die gestellte Aufgabe dadurch, dass an der zweiten Sekundärwicklung zumindest eine Strombegrenzungsdrossel angeordnet ist und der Belastungswiderstand zur Entladung der über die Strombegrenzungsdrossel aufladbaren Kapazität, die Strombegrenzungsdrossel, und die Kapazität so dimensioniert sind, dass der Maximalwert der Leerlaufspannung am Ausgang größer als die durch das Übersetzungsverhältnis der Primärwicklung zur zweiten Sekundärwicklung des Transformators entsprechenden Spannung ist.

Ist an der zweiten Sekundärwicklung zumindest eine Strombegrenzungsdrossel angeordnet, kann die zweite Sekundärwicklung mit einer größeren Windungszahl als die erste Sekundärwicklung ausgeführt sein, wodurch sich an der zweiten Sekundärwicklung eine höhere Ausgangsspannung als an der ersten Sekundärwicklung ergibt. Bei Parallelschaltung der gleichgerichteten Ausgangsspannung von erster und zweiter Sekundärwicklung im Leerlauf und bei kleinen Strömen wird die höhere Spannung der zweiten Sekundärwicklung die Ausgangsspannung bestimmen. Bei höheren Strömen wird allerdings der Spannungsabfall an der Strombegrenzungsdrossel ansteigen, sodass ab einem bestimmten Strom die erste Sekundärwicklung, die üblicherweise für eine hohe Strombelastung ausgelegt ist, den Ausgangsstrom großteils überträgt. Die so entstehende Ausgangskennlinie ermöglicht bei kleinen Strömen Spannungen, die vom Übersetzungsverhältnis der zweiten Sekundärwicklung bestimmt werden, und hohe Ströme entsprechend dem Übersetzungsverhältnis der ersten Sekundärwicklung. Mit den unterschiedlichen Übersetzungsverhältnissen von erster und zweiter Sekundärwicklung in Kombination mit einer Strombegrenzungsdrossel kann so eine verbesserte Zündung sowie eine Stabilisierung des Lichtbogens durch eine gegenüber dem Übersetzungsverhältnis der ersten Sekundärwicklung erhöhten Leerlaufspannung erzielt werden. Dennoch bestimmt bei hohen Strömen das Übersetzungsverhältnis der ersten Sekundärwicklung die Ströme bzw. die aufgenommene Leistung an der Primärseite. Eine Schweißstromquelle mit einer verbesserten Zündung und dennoch geringer Leistungsaufnahme kann so durch die Anordnung einer Strombegrenzungsdrossel an der zweiten Sekundärwicklung geschaffen werden, wobei konstruktiv aufwendige Maßnahmen, wie zum Beispiel gemäß der US 2004/119572 A1, vermieden werden können. Sind zudem der Belastungswiderstand zur Entladung der über die Strombegrenzungsdrossel aufladbaren Kapazität, die Strombegrenzungsdrossel, und die Kapazität so dimensioniert, dass der Maximalwert der Leerlaufspannung am Ausgang größer als die durch das Übersetzungsverhältnis der Primärwicklung zur zweiten Sekundärwicklung des Transformators entsprechenden Spannung ist, kann die Schweißspannung im Leerlauf weiter erhöht werden. Der durch Strombegrenzungsdrossel und Kapazität gebildete Schwingkreis wird bei jeder Änderung der über den Transformator übertragenen Eingangswechselspannung angeregt und schwingt mit seiner Eigenfrequenz um. Dieser Umschwingvorgang wird bei Änderung der Stromrichtung durch den an der zweiten Sekundärwicklung angeordneten Gleichrichter unterbrochen und die Kapazität am Ausgang über die der Spannungsübersetzung der zweiten Sekundärwicklung entsprechenden Ausgangsspannung geladen. Diese erhöhte Schweißspannung im Leerlauf bewirkt ein verbessertes Zündverhalten, da bekanntermaßen bei höheren Spannungen eine Zündung des Lichtbogens leichter durchführbar ist. So kann auch ein nach einem Kurzschluss verloschener Lichtbogen wesentlich leichter nach dem Aufbruch des Kurzschlusses wiedergezündet werden. Wird nun der Belastungswiderstand, der die Kapazität am Ausgang entlädt, so dimensioniert, dass sich eine maximale Ausgangsspannung im Leerlauf kleiner als die durch Sicherheitsvorgaben erlaubte Ausgangsspannung einstellt, können eine verbesserte Zündung des Lichtbogens beim Schweißstart erreicht und darüberhinaus die Sicherheitsvorgaben erfüllt werden.

Vorteilhafterweise ist der Maximalwert der Leerlaufspannung am Ausgang 5% bis 30% größer als die dem Übersetzungsverhältnis der Primärwicklung zur zweiten Sekundärwicklung des Transformators entsprechende Spannung. Dies erlaubt eine ausreichende Erhöhung der Ausgangsspannung für verbessertes Zündverhalten wobei auch die dafür notwendige Ladung der Kapazität am Ausgang innerhalb der durch die Schaltfrequenz vorgegebenen Zeitspanne erreicht werden kann.

Ist der Belastungswiderstand am Ausgang so dimensioniert, dass die Zeitkonstante des aus diesem Belastungswiderstand und der Kapazität bestehenden RC-Gliedes am Ausgang zwischen dem 1-fachen und 20-fachen der reziproken Schaltfrequenz des Inverters beträgt, kann der Umschwingvorgang in ausreichendem Ausmaß stattfinden und gleichzeitig der Maximalwert der Ausgangsspannung soweit abgesenkt werden, dass Sicherheitsvorgaben hinsichtlich der Ausgangsspannung erfüllt werden können.

Beträgt die Resonanzfrequenz des aus Strombegrenzungsdrossel und Kapazität am Ausgang bestehenden Schwingkreises zwischen dem 3-fachen und 20-fachen der Schaltfrequenz des Inverters, ist der Umschwingvorgang ausreichend schnell in der durch die Schaltfrequenz des Inverters vorgegebenen Zeitspanne abgeschlossen. Dennoch können die bei der Umladung entstehenden Strom- und Spannungsverläufe in einem Frequenzbereich bleiben, der schaltungstechnisch mit geringem Aufwand beherrscht werden kann.

Weist die zweite Sekundärwicklung des Transformators eine Mittelanzapfung auf, und sind die Anschlüsse der zweiten Sekundärwicklung des Transformators mit jeweils einer Strombegrenzungsdrossel verbunden, kann eine Vollweggleichrichtung mit nur zwei Dioden realisiert werden. Der Bauteilaufwand für eine Brückengleichrichtung und die damit verbundenen Kosten können eingespart werden.

Weitere Verbesserungen können erzielt werden, wenn die beiden Strombegrenzungsdrosseln durch eine gekoppelte Strombegrenzungsdrossel gebildet sind. Aufgrund der Anordnung der gekoppelten Strombegrenzungsdrossel auf einem gemeinsamen magnetischen Kern können Unsymmetrien der elektrischen Eigenschaften der einzelnen Drosselwicklungen ausgeglichen und somit auf aufwendige Maßnahmen, zur Verhinderung derSättigung des Transformators verzichtet werden. Verglichen mit zwei voneinander unabhängigen Strombegrenzungsdrosseln, die nahezu identische elektrische Eigenschaften aufweisen müssten, um die Sättigung des Transformators zu vermeiden, kann auf eine wesentlich aufwendigere Produktion bzw. Selektion und damit verbundene Mehrkosten verzichtet werden. Auch die Herstellungskosten einer gekoppelten Drossel sind üblicherweise geringer als die von zwei separaten Drosseln.

Ist die Kapazität am Ausgang durch zumindest zwei Kondensatoren gegen Erde gebildet, können diese noch zusätzliche Funktionen ausführen, beispielsweise als EMV (Elektromagnetische Verträglichkeit) Entstörkondensatoren oder als Strompfad für die hochfrequenten Signale einer eventuell vorhanden Hochfrequenzzündung.

Vorzugsweise beträgt die Kapazität am Ausgang zumindest 10nF, da so genügend Energie gespeichert werden kann, um das Zündverhalten der Schweißstromquelle zu verbessern.

Weist die Strombegrenzungsdrossel eine Induktivität zwischen einem Fünftel des Betrags der reziproken Schaltfrequenz und dem fünffachen Betrag der reziproken Schaltfrequenz auf, kann die Strombegrenzungsdrossel für eine ausreichende Strombegrenzung bei dem von der Leistung abhängigen Maximalstrom sorgen und somit die zweite Sekundärwicklung vor Überlastung schützen.

Vorteilhaft ist die Windungszahl der zweiten Sekundärwicklung zumindest doppelt so groß wie die Windungszahl der ersten Sekundärwicklung des Transformators. Da die von der ersten Sekundärwicklung des Transformators bereitgestellte Ausgangsspannung meist unter der halben maximal zulässigen Ausgangsspannung liegt, kann so eine erhöhte Leerlaufspannung, welche dennoch unter der maximal zulässigen Ausgangsspannung liegt, erreicht werden.

Ist die über die zweite Sekundärwicklung übertragbare Leistung größer 250W, vorzugsweise größer 500W, kann nicht nur das Zündverhalten der Schweißstromquelle verbessert werden, sondern auch die Schweißeigenschaften bei kleinen Strömen. Dies kann das Schweißen bei Strömen kleiner 50 A mit Spannungen größer als die der ersten Sekundärwicklung erlauben. Bei speziellen Stabelektroden, wie beispielsweise Zellulose-Elektroden, kann so ein stabilerer Lichtbogen und dadurch ein besseres Schweißergebnis erzielt werden.

Vorzugsweise beträgt die Schaltfrequenz zwischen 20kHz und 200kHz, vorzugsweise zwischen 40kHz und 120kHz, wodurch kostengünstigere und leichtere Transformatoren eingesetzt werden können.

Die Schweißstromquelle weist ein besonders vorteilhaftes Zündverhalten auf, wenn der Maximalwert der Leerlaufspannung am Ausgang zwischen 90V und 113V DC beträgt, wobei zugleich gängige Sicherheitsvorschriften eingehalten werden können.

Die gegenständliche Erfindung wird nachfolgend unter Bezugnahme auf die Fig. 1 bis Fig. 7 näher erläutert. Die Figuren zeigen beispielhaft, schematisch und nicht einschränkend vorteilhafte Ausgestaltungen der Erfindung. Dabei zeigt

Fig. 1    ein Blockschaltbild einer primär getakteten Schweißstromquelle;

Fig. 2    eine Prinzipschaltung einer ersten Ausführungsform einer erfindungsgemäßen Schweißstromquelle;

Fig. 3    die U/I-Kennlinie einer erfindungsgemäßen Schweißstromquelle;

Fig. 4    die zeitlichen Verläufe von Strom und Spannung einer erfindungsgemäßen Schweißstromquelle;

Fig. 5    ein vereinfachtes Schaltbild zur Erläuterung des Leerlaufspannungsverlaufs;

Fig. 6    die zeitlichen Verläufe des Stromes und der Leerlaufspannung der Schaltungsanordnung gemäß Fig.5; und

Fig. 7    eine Prinzipschaltung einer weiteren Ausführungsform einer erfindungsgemäßen Schweißstromquelle.

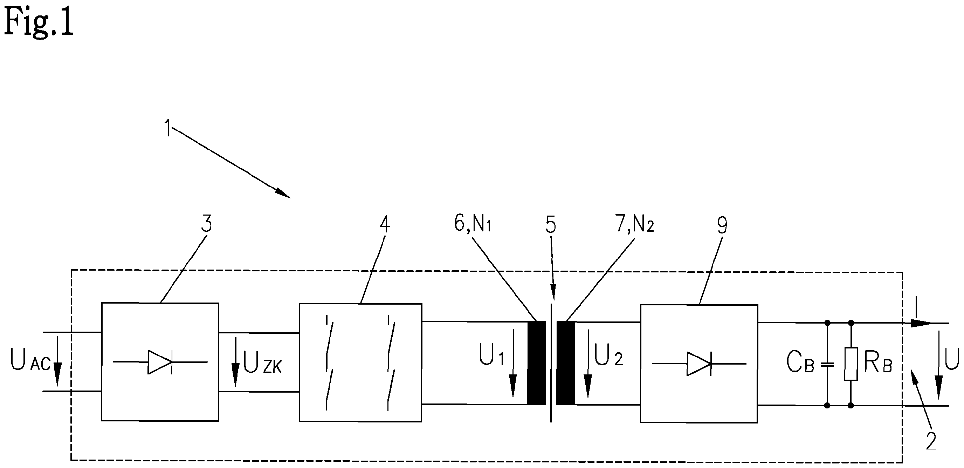

Fig. 1 zeigt ein Blockschaltbild einer primär getakteten Schweißstromquelle 1 zur Bereitstellung eines Schweißstroms I und einer Schweißspannung U an einem Ausgang 2 für die Durchführung eines Lichtbogenschweißverfahrens, beispielsweise eines WIG-Schweißverfahrens, Stabelektrodenschweißverfahrens oder MIG/MAG Schweißverfahrens. Die Eingangsspannung $U_{AC}$ wird mittels eines eingangsseitigen Gleichrichters 3 zur Zwischenkreisspannung $U_{ZK}$ gleichgerichtet. Dabei kann auch ein nicht näher beschriebenes Leistungsfaktorkorrekturfilter (PFC Power Factor Correction), oder auch ein sogenannter Booster zur Erhöhung, Glättung und/oder Stabilisierung der Zwischenkreisspannung $U_{ZK}$ eingesetzt werden. Ein nachgeschalteter Inverter 4, der beispielsweise als Vollbrücke ausgeführt ist, erzeugt eine Wechselspannung $U_1$ mit der Schaltfrequenz $f_S$, die an die Primärwicklung 6 eines Transformators 5 angelegt wird. Diese Wechselspannung $U_1$ ist näherungsweise eine Rechteckspannung und wird durch den Transformator 5 abwärts auf die Spannung $U_2$ transformiert, um gleichzeitig eine hohe Stromübersetzung und damit einen hohen Schweißstrom I erzielen zu können. Dementsprechend hat die Sekundärwicklung 7 des Transformators 5 eine hohe Strombelastbarkeit, um Schweißströme I im Bereich einiger 100A, beispielsweise bis zu 600A bereitstellen zu können. Der Strom an der Sekundärwicklung 7 des Transformators 5 wird über einen ausgangsseitigen Gleichrichter 9 gleichgerichtet und am Ausgang 2 bereitgestellt. Außerdem sind an dem Ausgang 2 eine Kapazität $C_B$ und ein Belastungswiderstand $R_B$ angeordnet, um Störungen zu dämpfen.

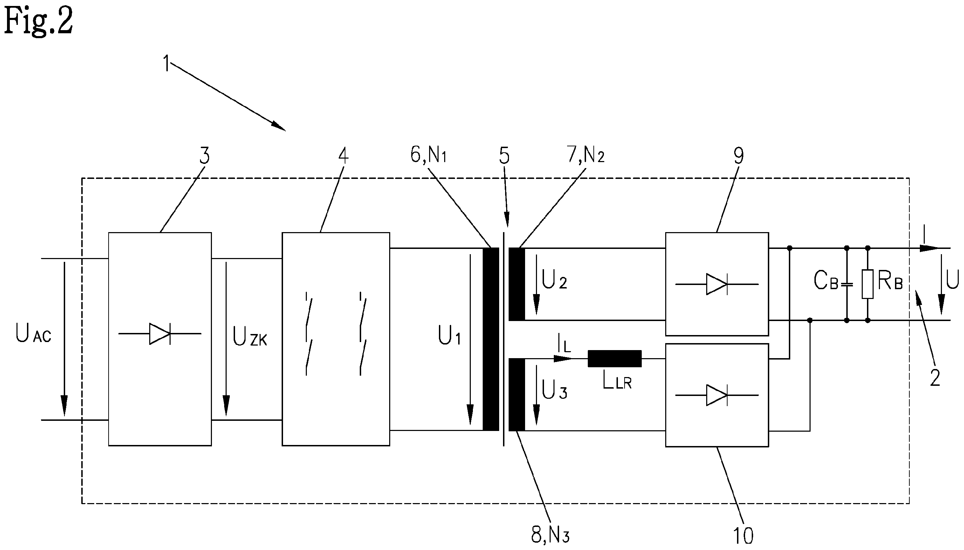

In der Prinzipschaltung einer ersten Ausführungsform einer erfindungsgemäßen Schweißstromquelle 1 gemäß Fig. 2 ist eine zweite Sekundärwicklung 8 des Transformators 5 erkennbar. Die Spannung $U_3$ der zweiten Sekundärwicklung 8 wird über einen weiteren ausgangsseitigen Gleichrichter 10 an den Ausgang 2 der Schweißstromquelle 1 geführt. Diese zweite Sekundärwicklung 8 ist mit einer größeren Windungszahl $N_3$ als die Windungszahl $N_2$ der ersten Sekundärwicklung 7 ausgeführt. Somit ergibt sich an der zweiten Sekundärwicklung 8 eine höhere Spannung $U_3$ als an der ersten Sekundärwicklung 7. Im Leerlauf ist daher die Spannung $U_3$ der zweiten Sekundärwicklung 8 am Ausgang 2 dominierend und gibt die Leerlaufausgangsspannung $U_{LL}$ der Schweißstromquelle 1 vor.

Um Kosten zu sparen ist die zweite Sekundärwicklung 8 aber leistungsschwächer als die erste Sekundärwicklung 7, welche die hohen Schweißströme I liefern kann, ausgeführt. Zu diesem Zweck ist erfindungsgemäß an der zweiten Sekundärwicklung 8 eine Strombegrenzungsdrossel $L_{LR}$ angeordnet, die bei hohen Strömen I einen Spannungsabfall verursacht und damit den Strom $I_L$ der zweiten Sekundärwicklung 8 begrenzt. Der Einsatz der Strombegrenzungsdrossel $L_{LR}$ bewirkt, dass die hohe Leerlaufspannung $U_{LL}$ von der zweiten Sekundärwicklung 8 und die sehr hohen Ströme I im Schweißbetrieb von der ersten Sekundärwicklung 7 zur Verfügung gestellt werden. Die erhöhte Leerlaufspannung $U_{LL}$ bewirkt ein verbessertes Zündverhalten, kann aber aufgrund der Übersetzungsverhältnisse des Transformators 5 nur in groben Bereichen vorgegeben werden. Für die hohe Stromübersetzung weist die erste Sekundärwicklung 7, die für den Schweißbetrieb bei hohen Strömen ausgelegt ist, oft nur eine Windung mit einer Leerlaufspannung $U_{2LL}$ von beispielsweise 45V auf. Wird die zweite Sekundärwicklung 8 mit zwei Windungen ausgeführt, hat diese eine Leerlaufspannung $U_{3LL}$ von 90V. Bei drei Windungen hätte die zweite Sekundärwicklung 8 jedoch schon eine Leerlaufspannung $U_{3LL}$ von 135V, wodurch aktuelle Sicherheitsnormen, die einen Maximalwert von nur 113V DC erlauben, nicht erfüllt würden. Um trotzdem die Sicherheitsnormen zu erfüllen, wären schaltungstechnisch komplexe und kostenintensive Sicherheitsmaßnahmen erforderlich.

Der sich aus Strombegrenzungsdrossel $L_{LR}$ und Kapazität $C_B$ ergebende Schwingkreis ist so dimensioniert, dass bei Spannungssprüngen am Transformator 5, die bei jeder Polaritätsänderung der Rechteckspannung $U_1$ auftreten, die Kapazität $C_B$ am Ausgang 2 durch einen Umschwingvorgang mit der Schwingkreisfrequenz $f_{01}$, $f_{02}$ geladen wird. Dieser Umschwingvorgang wird nach Aufladung der Kapazität $C_B$ am Ausgang 2 durch den ausgangsseitigen Gleichrichter 10 unterbrochen. Daran angepasst ist der Belastungswiderstand $R_B$ zur Entladung der Kapazität $C_B$ so dimensioniert, dass der Maximalwert der Leerlaufspannung $U_{LL}$ am Ausgang 2 größer als die durch das Übersetzungsverhältnis der Primärwicklung 6 zur zweiten Sekundärwicklung 8 des Transformators 5 entsprechenden Spannung $U_3$ ist. Mit der so ausgenutzten Aufladung und teilweisen Entladung der Kapazität $C_B$ wird eine maximale Leerlaufspannung $U_{LL}$ am Ausgang 2 größer als die dem Übersetzungsverhältnis entsprechende Spannung $U_3$ aber dennoch kleiner als die durch Sicherheitsvorgaben erlaubte Schweißspannung U erzielt.

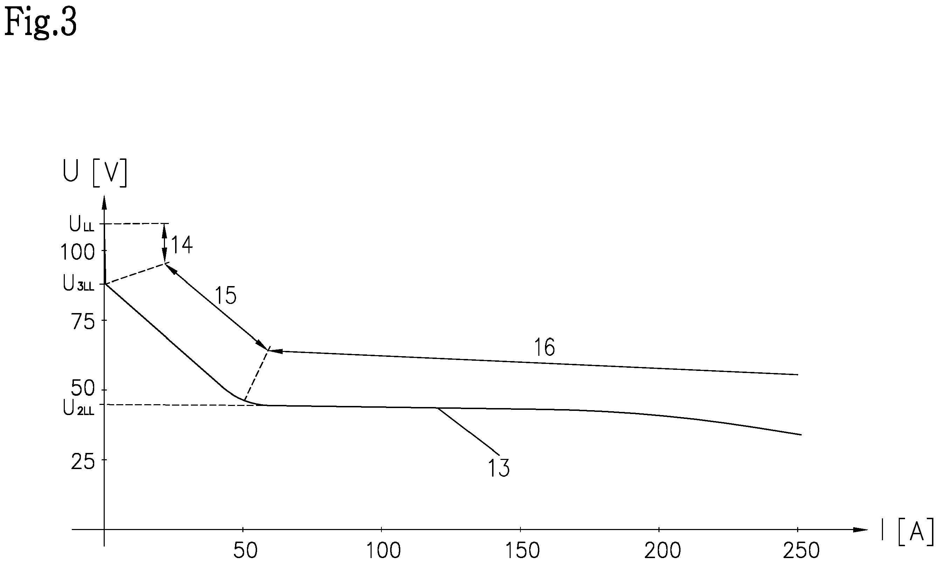

Fig. 3 zeigt ein Beispiel einer Ausgangskennlinie 13 einer erfindungsgemäßen Schweißstromquelle 1 bei maximaler Pulsweite des Inverters 4. Die Ausgangskennlinie 13 kann dabei in drei Abschnitte 14, 15, 16 gegliedert werden. Davon befindet sich der erste Abschnitt 14 im Leerlauf und stellt die durch die Aufladung und teilweise Entladung der Kapazität $C_B$ bewirkte maximale Spannungserhöhung dar. Dabei erleichtert die in der Kapazität $C_B$ gespeicherte Energie eine einfache Zündung des Lichtbogens. Im zweiten Abschnitt 15 der Ausgangskennlinie 13 entspricht die Schweißspannung U der der zweiten Sekundärwicklung 8 gleichgerichtete Spannung $U_3$. Mit zunehmenden Schweißstrom I steigt der Spannungsabfall an der Strombegrenzungsdrossel $L_{LR}$ und die Schweißspannung U wird dementsprechend kleiner. In diesem Strombereich wird der Schweißstrom I von der zweiten Sekundärwicklung 8 übertragen. Im dritten Abschnitt 16 der Ausgangskennlinie 13 ist die Schweißspannung U die gleichgerichtete Spannung $U_2$ der ersten Sekundärwicklung 7. Hier verursacht die Strombegrenzungsdrossel $L_{LR}$ einen so hohen Spannungsabfall, dass weitere Stromerhöhungen nur mehr über die erste Sekundärwicklung 7 bereitgestellt werden können. Hohe Schweißströme I werden dementsprechend hauptsächlich von der ersten Sekundärwicklung 7 übertragen.

In der dargestellten Ausgangskennlinie 13 ist der Maximalwert der Leerlaufspannung $U_{LL}$ am Ausgang 2 etwa 15% größer als die dem Übersetzungsverhältnis der Primärwicklung 6 zur zweiten Sekundärwicklung 8 des Transformators 5 entsprechende Spannung. Allgemein ist für die Erhöhung der Leerlaufspannung $U_{LL}$ ein Bereich zwischen 5% und 30% empfehlenswert, da hier eine ausreichende Spannungserhöhung für verbessertes Zündverhalten und auch die notwendige Energiespeicherung in der Kapazität $C_B$ am Ausgang 2 erreicht werden kann.

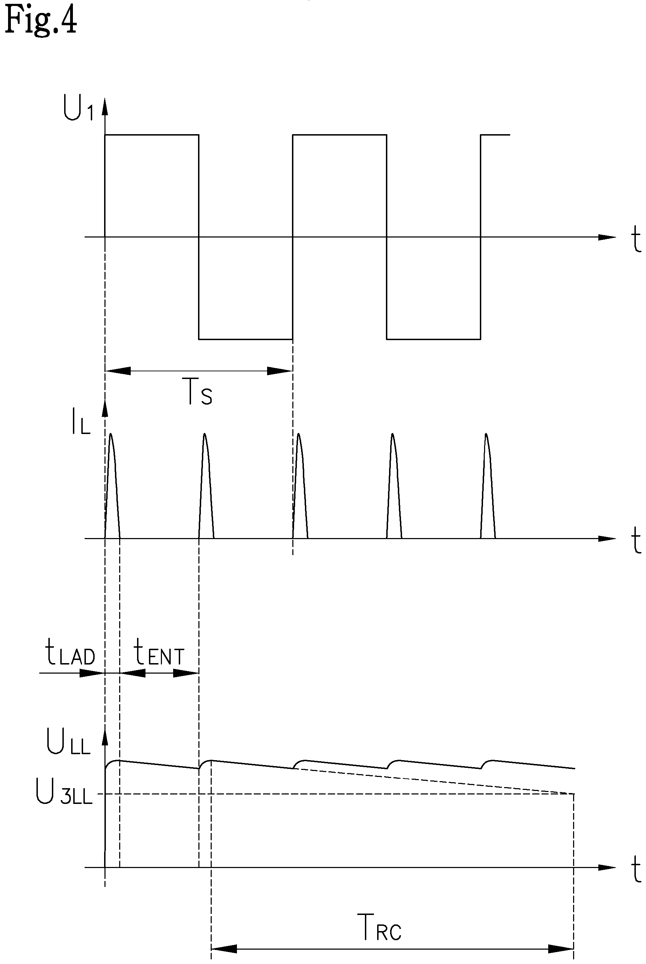

In Fig. 4 sind idealisierte Verläufe für die Spannung $U_1$ an der Primärseite 6 des Transformators 5, den Strom $I_L$ durch die Strombegrenzungsdrossel $L_{LR}$ sowie der Leerlaufspannung $U_{LL}$ am Ausgang 2 der Schweißstromquelle 1 zu entnehmen. Idealisiert deswegen, da nicht erfindungsrelevante Schaltungsteile, wie beispielsweise in vielen realen Schaltungen vorkommende Schaltungen zur Dämpfung (sogenannte Snubber-Schaltungen) nicht in Betracht gezogen sind. Ebenso sind Schwingungen, die beispielsweise durch parasitäre Kapazitäten der Gleichrichter 10 verursacht werden, vernachlässigt. Wie aus dem Zeitverlauf des Stroms $I_L$ durch die Strombegrenzungsdrossel $L_{LR}$ erkennbar, wird nach einer Spannungsänderung von $U_1$ ein Umschwingvorgang, der eine Aufladung der Kapazität $C_B$ am Ausgang 2 bewirkt, gestartet. Mit dem Nulldurchgang von $I_L$ wird der ausgangsseitige Gleichrichter 10 sperrend, wodurch die resonante Schwingung mit der Resonanzfrequenz $f_{02}$ am Ende der Ladezeit $t_{LAD}$ abgebrochen wird. Danach erfolgt die Entladung der Kapazität $C_B$ über den Belastungswiderstand $R_B$ während der Entladezeit $t_{ENT}$, wie im Zeitverlauf der Leerlaufspannung $U_{LL}$ am Ausgang 2 erkennbar ist. Dieser Ablauf wiederholt sich noch einmal innerhalb der Periodendauer $T_S$ der Spannung $U_1$ an der Primärseite 6 des Transformators 5. Die Periodendauer $T_S$ entspricht der reziproken Schaltfrequenz $f_S$ des Inverters 4.

Aus Fig. 4 ist auch erkennbar, dass die Zeitkonstante $T_{RC}$ des aus diesem Belastungswiderstand $R_B$ und der Kapazität $C_B$ bestehenden RC-Gliedes am Ausgang 2 ungefähr dem 2 fachen der reziproken Schaltfrequenz $f_S$ des Inverters 4 beträgt. Je nach Größe von Strombegrenzungsdrossel $L_{LR}$ und Kapazität $C_B$ können hier Zeitkonstanten $T_{RC}$ zwischen dem 1-fachen und 20-fachen der reziproken Schaltfrequenz $f_S$ des Inverters 4 vorteilhaft sein. Über diese Zeitkonstante $T_{RC}$ wird die Entladung der Kapazität $C_B$ und somit der Maximalwert der Leerlaufspannung $U_{LL}$ der Schweißstromquelle 1 eingestellt. Sicherheitsvorgaben hinsichtlich der Höhe der Schweißspannung U lassen sich dadurch erfüllen.

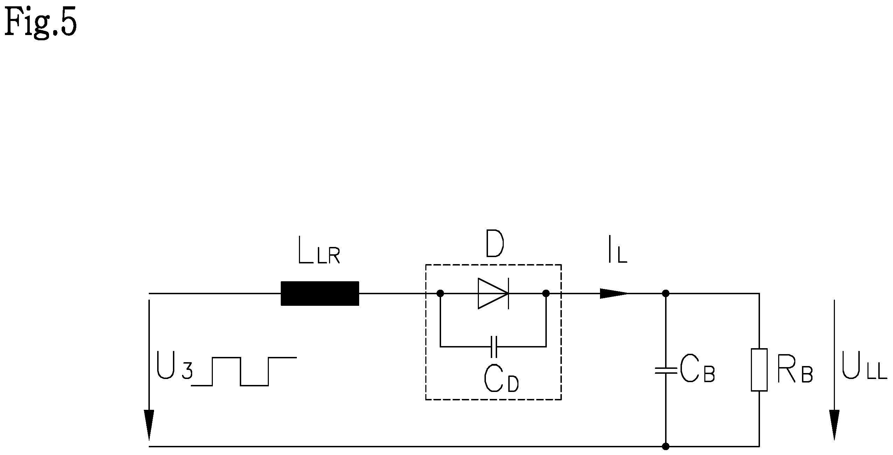

Fig. 5 zeigt ein vereinfachtes Schaltbild zur Erläuterung des Verlaufs der Leerlaufspannung $U_{LL}$. Die ideal angenommene Eingangsrechteckspannung $U_3$ liegt dabei an einer Schaltungsanordnung aus Strombegrenzungsdrossel $L_{LR}$, Diode D mit parasitärer Kapazität $C_D$ sowie Kapazität $C_B$ und Belastungswiderstand $R_B$. An der Kapazität $C_B$ bzw. am Belastungswiderstand $R_B$ bildet sich die Leerlaufausgangsspannung $U_{LL}$ aus.

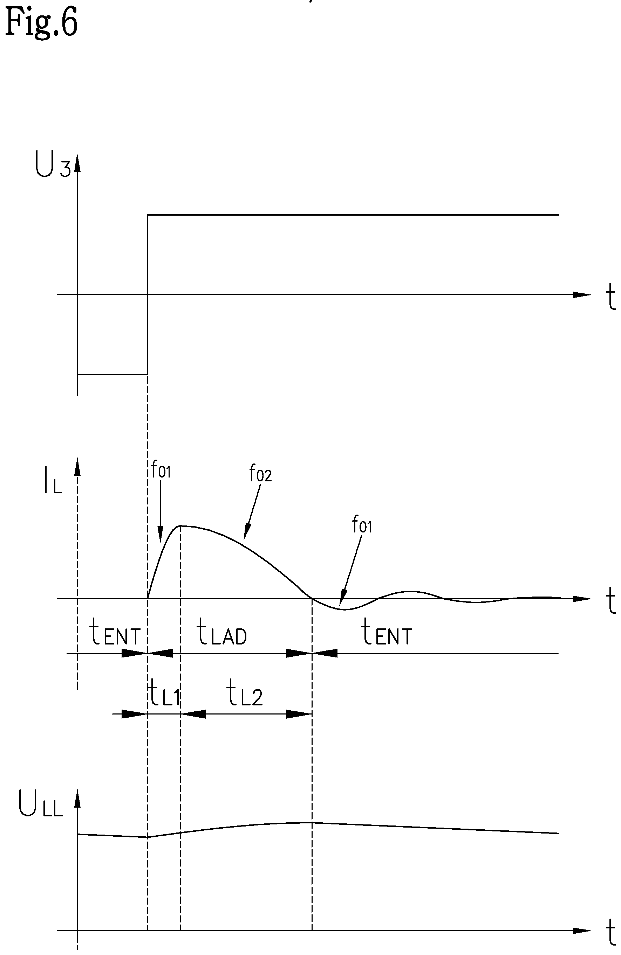

Fig. 6 stellt die zeitlichen Verläufe der Eingangsspannung $U_3$, von Strom $I_L$ und Leerlaufspannung $U_{LL}$ der Schaltung gemäß Fig. 5 dar. Genaugenommen wird in Fig. 6 eine positiven Spannungsänderung der Eingangsspannung $U_3$ im eingeschwungenen Zustand und deren Auswirkung auf Strom $I_L$ und Leerlaufspannung $U_{LL}$ gezeigt. Unmittelbar nach der positiven Spannungsänderung der Eingangsspannung $U_3$ ist die Diode D nicht leitend. Somit wird ein Schwingkreis aus der Strombegrenzungsdrossel $L_{LR}$ und der parasitären Kapazität $C_D$ der Diode D sowie der Kapazität $C_B$ am Ausgang durch die Spannungsänderung angeregt. Aus dem Verlauf des Stromes $I_L$ ist ersichtlich, dass die Frequenz der freien

Schwingung etwa $f_{01} = \dfrac{1}{2\pi\sqrt{L_{LR}\frac{C_D \cdot C_B}{C_D + C_B}}}$ beträgt und dauert im dargestellten Ausführungsbeispiel für etwa % Periodendauer der freien Schwingung an. Dies entspricht dem Zeitraum $t_{L1}$ in Fig. 6. Dadurch wird $C_D$ soweit entladen, dass eine Spannung in Durchlassrichtung an der Diode D anliegt. Die Diode D wird leitend und der Schwingkreis wird nunmehr durch die Strombegrenzungsdrossel $L_{LR}$ und die Kapazität $C_B$ am Ausgang 2 gebildet. Die Frequenz der freien Schwingung beträgt nun etwa

$$f_{02} = \frac{1}{2\pi\sqrt{L_{LR} \cdot C_B}}$$ und dauert im Ausführungsbeispiel für etwa % Periodendauer, dem Zeitraum $t_{L2}$, der nun aktuellen freien Schwingung an. Anschließend kommt es zum Nulldurchgang des Stroms $I_L$, wodurch die Diode D in den nichtleitenden Zustand übergeht. Über den Zeitraum $t_{LAD} = t_{L1} + t_{L2}$ wird somit die Kapazität $C_B$ am Ausgang 2 geladen und die Leerlaufspannung $U_{LL}$ steigt dabei an. Anschließend entsteht bei sperrender Diode D wieder ein Schwingkreis mit der parasitären Kapazität $C_D$ der Diode D und der Schwingungsfrequenz $f_{01}$. Hierbei erfolgt aber lediglich ein abklingendes Umschwingen der Energie zwischen der Strombegrenzungsdrossel $L_{LR}$ und der parasitären Kapazität $C_D$ der Diode D sowie der Kapazität $C_B$ am Ausgang 2. Dieser Umschwingvorgang trägt aber weder nennenswert zur Ladung noch Entladung der Kapazität $C_B$ am Ausgang 2 bei. Vielmehr erfolgt im Zeitraum $t_{ENT}$ eine Entladung der Kapazität $C_B$ über den Belastungswiderstand R. Dies ist auch aus der fallenden Leerlaufspannung $U_{LL}$ im Zeitraum $t_{ENT}$ ersichtlich.

Des Weiteren ist die Resonanzfrequenz $f_{02}$ des aus Strombegrenzungsdrossel $L_{LR}$ und Kapazität $C_B$ am Ausgang 2 bestehenden Schwingkreises ca. das 5-fache der Schaltfrequenz $f_S$ des Inverters 4. Der Umschwingvorgang und damit die Ladung der Kapazität $C_B$ werden so ausreichend schnell durchgeführt. Bei den gezeigten Strom- und Spannungsverläufen nach Fig.4 ist die Umladung nach etwa 1/10 der Periodendauer $T_S$ der Trafowechselspannung $U_1$ abgeschlossen. Generell kann sich hier eine Resonanzfrequenz $f_{02}$ des Schwingkreises aus Strombegrenzungsdrossel $L_{LR}$ und Kapazität $C_B$ zwischen dem 3-fachen und 20-fachen der Schaltfrequenz $f_S$ des Inverters 4 empfehlen. Hier ist der Umschwingvorgang ausreichend schnell aber dennoch in einem schaltungstechnisch einfach beherrschbaren Frequenzbereich.

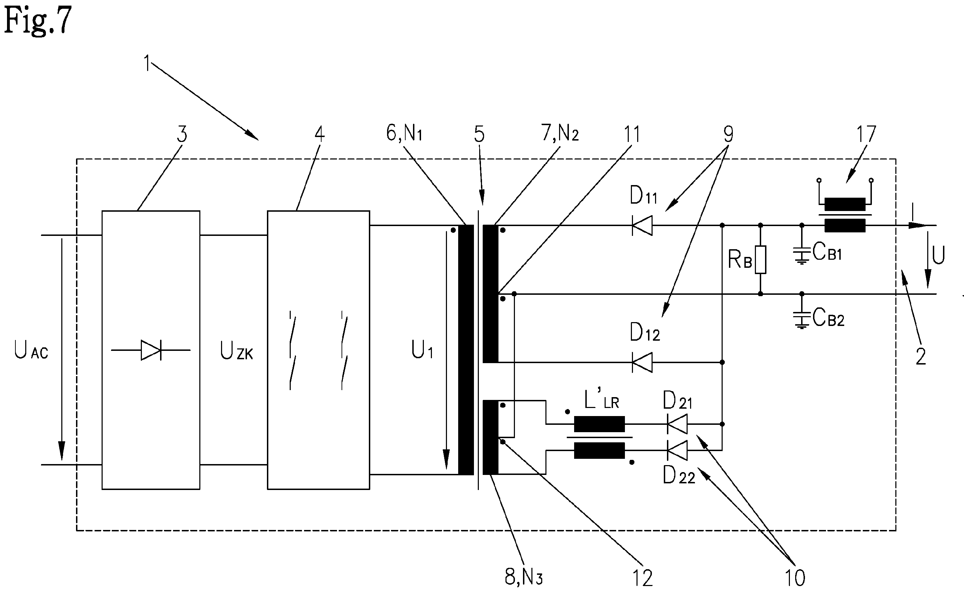

Fig. 7 zeigt eine Prinzipschaltung einer weiteren Ausführungsform einer erfindungsgemäßen Schweißstromquelle 1. Eventuell notwendige Snubber-Schaltungen zur Unterdrückung hochfrequenter Signale, Glättungsdrosseln am Ausgang sowie andere nicht erfindungsrelevante Schaltungsbestandteile sind in dieser Prinzipschaltung nicht dargestellt. Bei der Ausführungsform nach Fig. 7 sind die Sekundärwicklungen 7, 8 des Transformators 5 mit Mittelanzapfung 11, 12 ausgeführt. Eine Vollweggleichrichtung lässt sich hier mittels nur zwei Dioden $D_{11}$, $D_{12}$ bzw. $D_{21}$, $D_{22}$ realisieren, wodurch der Bauteilaufwand und entsprechende Kosten für eine Brückengleichrichtung eingespart werden. Für eine Kostenreduktion kann es vorteilhaft sein, für die Dioden $D_{11}$, $D_{12}$, $D_{21}$, $D_{22}$ baugleiche Dioden zu verwenden.

Beide Anschlüsse der zweiten Sekundärwicklung 8 des Transformators 5 sind mit einer gekoppelten Strombegrenzungsdrossel $L'_{LR}$ verbunden. Aufgrund der Anordnung der gekoppelten Strombegrenzungsdrossel $L'_{LR}$ auf einem gemeinsamen magnetischen Kern werden Unsymmetrien der elektrischen Eigenschaften der einzelnen Drosselwicklungen ausgeglichen und die Sättigung des Transformators 5 verhindert. Eine aufwendigere Produktion bzw. Selektion und damit verbundene Mehrkosten werden verhindert.

In dem Ausführungsbeispiel nach Fig. 7 ist die Kapazität am Ausgang 2 durch zwei Kondensatoren $C_{B1}$, $C_{B2}$ gegen Erde gebildet. Diese Kondensatoren $C_{B1}$, $C_{B2}$ haben neben der erfindungsgemäßen Funktion zur Erhöhung der Leerlaufspannung $U_{LL}$ zugleich die Funktion der EMV Entstörkondensatoren, wodurch sich Einsparungen ergeben. Die Kondensatoren $C_{B1}$, $C_{B2}$ schließen zugleich den Strompfad für die Signale einer schematisch dargestellten Hochfrequenzzündung 17.

Die Verbesserung der Zündeigenschaften der Schweißstromquelle 1 ist nicht nur von der Höhe der Leerlaufspannung $U_{LL}$, sondern im vorliegenden Fall auch von der Menge der in der Kapazität $C_B$ bzw. $C_{B1}$, $C_{B2}$ gespeicherten Energie abhängig. Daher sollte die Kapazität $C_B$ zumindest 10nF betragen, um für eine ausreichende Ionisierung des Gases der Zündstrecke zu sorgen. Im Ausführungsbeispiel nach Fig. 7 würde dies bedeuten, dass jeder der Kondensatoren $C_{B1}$, $C_{B2}$ eine Kapazität von zumindest 20nF aufweist.

Näherungsweise kann die Größe der Induktivität der Strombegrenzungsdrossel $L_{LR}$ nach der Formel

$$L_{LR} = \frac{(U_3-U_2)^2}{4.P_{3max}.f_S}$$ abgeschätzt werden. Wird für $U_3$ - $U_2$ ein Bereich von 40V bis 70V und für die Leistung $P_{3max}$ ein Bereich zwischen 250W und 2000W angenommen, ergibt sich für die Induktivität der Strombegrenzungsdrossel $L_{LR}$ ein Bereich zwischen einem Fünftel des Betrags der reziproken Schaltfrequenz $f_S$ und dem fünffachen Betrag der reziproken Schaltfrequenz $f_S$. Dabei hat sich für Schweißstromquellen 1 mit einem maximalen Schweißstrom unter 600A der Bereich des halben bis zum zweieinhalbfachen Betrag der reziproken Schaltfrequenz $f_S$ als besonders vorteilhaft herausgestellt.

Sind die Kapazität $C_B$ und die Strombegrenzungsdrossel $L_{LR}$ festgelegt, kann die Dimensionierung des Belastungswiderstands R günstig durch ein Herantasten über zumindest zwei Werte von R durchgeführt werden. Vorzugsweise wird die Schaltungsanordnung mit einem Belastungswiderstand R an der unter Grenze des Wertebereichs in Betrieb genommen. Ein erster Wert für R ergibt sich somit zu $R = \frac{1}{f_S.C_B}$. Abhängig von der sich ergebenden ersten Leerlaufspannung $U_{LL}$ kann eine zweite Messung der Leerlaufspannung $U_{LL}$ bei beispielsweise dem 5-fachen Wert des Belastungswiderstands R durchgeführt werden. Durch lineare Interpolation und gegebenenfalls einer weiteren Iteration kann die notwendige Größe des Belastungswiderstands R für die gewünschte Leerlaufspannung $U_{LL}$ ermittelt werden.

Bei dem gezeigten Ausführungsbeispiel nach Fig.7 weist die Primärwicklung 6 beispielsweise eine Windungszahl $N_1$ von 9 Windungen, die erste Sekundärwicklung 7 eine Windungszahl $N_2$ von 1+1 Windungen und die zweite Sekundärwicklung 8 eine Windungszahl $N_3$ von 2+2 Windungen auf. Dementsprechend ist die Windungszahl $N_3$ der zweiten Sekundärwicklung 8 doppelt so groß wie die Windungszahl $N_2$ der ersten Sekundärwicklung 7 des Transformators 5.

Dabei beträgt die über die zweite Sekundärwicklung 8 übertragbare Leistung $P_{3max}$ vorzugsweise mehr als 250W, um nicht nur das Zündverhalten der Schweißstromquelle 1 zu verbessern, sondern auch die Schweißeigenschaften bei kleinen Strömen I. Bei einer übertragbaren Leistung $P_{3max}$ von beispielsweise 1000W tragen bei Strömen I kleiner 25A Spannungen U größer 40V zur Stabilisierung des Lichtbogens bei. Hingegen trägt beispielsweise bei einer übertragbaren Leistung $P_{3max}$ von 2000W die zweite Sekundärwicklung 8 schon bei Strömen I kleiner 50A zur Stabilisierung des Lichtbogens bei. Dies entspricht etwa den Werten der in Fig. 3 dargestellten Ausgangskennline. Bei speziellen

Stabelektroden, wie beispielsweise Zellulose-Elektroden, ist dies besonders vorteilhaft.

Bevorzugt beträgt die Schaltfrequenz $f_S$ des primärseitigen Inverters 4 zwischen 20 kHz und 200 kHz, was den Einsatz kostengünstigerer und leichterer Transformatoren 5 erlaubt.

Ein besonders günstiges Zündverhalten bei Einhaltung aktuell geltender Sicherheitsbestimmungen ergibt sich, wenn der Maximalwert der Leerlaufspannung $U_{LL}$ am Ausgang zwischen 90V und 113V DC beträgt.

**Patentansprüche**

1. Schweißstromquelle (1) zur Bereitstellung eines Schweißstroms (I) und einer Schweißspannung (U) an einem Ausgang (2) für die Durchführung eines Lichtbogenschweißverfahrens, mit einem eingangsseitigen Gleichrichter (3), einem mit einer Schaltfrequenz ($f_S$) betriebenen Inverter (4), einem Transformator (5) mit einer Primärwicklung (6) und zumindest zwei Sekundärwicklungen (7, 8), zumindest zwei zwischen den Sekundärwicklungen (7, 8) und dem Ausgang (2) angeordneten Gleichrichtern (9, 10), und zumindest einer Kapazität ($C_B$) und einem Belastungswiderstand ($R_B$) am Ausgang (2), **dadurch gekennzeichnet, dass** an der zweiten Sekundärwicklung (8) zumindest eine Strombegrenzungsdrossel ($L_{LR}$) angeordnet ist und der Belastungswiderstand ($R_B$) zur Entladung der über die Strombegrenzungsdrossel ($L_{LR}$) aufladbaren Kapazität ($C_B$), die Strombegrenzungsdrossel ($L_{LR}$), und die Kapazität ($C_B$) so dimensioniert sind, dass der Maximalwert der Leerlaufspannung ($U_{LL}$) am Ausgang (2) größer als die durch das Übersetzungsverhältnis der Primärwicklung (6) zur zweiten Sekundärwicklung (8) des Transformators (5) entsprechenden Spannung ($U_3$) ist.

2. Schweißstromquelle (1) nach Anspruch 1, **dadurch gekennzeichnet, dass** der Maximalwert der Leerlaufspannung ($U_{LL}$) am Ausgang (2) 5% bis 30% größer als die dem Übersetzungsverhältnis der Primärwicklung (6) zur zweiten Sekundärwicklung (8) des Transformators (5) entsprechende Spannung ($U_3$) ist.

3. Schweißstromquelle (1) nach Anspruch 1 oder 2, **dadurch gekennzeichnet, dass** der Belastungswiderstand ($R_B$) am Ausgang (2) so dimensioniert ist, dass die Zeitkonstante ($T_{RC}$) des aus diesem Belastungswiderstand ($R_B$) und der Kapazität ($C_B$) bestehenden RC-Gliedes am Ausgang (2) zwischen dem 1-fachen und 20-fachen der reziproken Schaltfrequenz ($f_S$) des Inverters (4) beträgt.

4. Schweißstromquelle (1) nach einem der Ansprüche 1 bis 3, **dadurch gekennzeichnet, dass** die Reso-

nanzfrequenz ($f_{02}$) des aus Strombegrenzungsdrossel ($L_{LR}$) und Kapazität ($C_B$) am Ausgang (2) bestehenden Schwingkreises zwischen dem 3-fachen und 20-fachen der Schaltfrequenz ($f_S$) des Inverters (4) beträgt.

5. Schweißstromquelle (1) nach einem der Ansprüche 1 bis 4, **dadurch gekennzeichnet, dass** die zweite Sekundärwicklung (8) des Transformators (5) eine Mittelanzapfung (12) aufweist, und die Anschlüsse der zweiten Sekundärwicklung (8) des Transformators (5) mit jeweils einer Strombegrenzungsdrossel ($L_{LR}$) verbunden sind.

6. Schweißstromquelle (1) nach Anspruch 5, **dadurch gekennzeichnet, dass** die beiden Strombegrenzungsdrosseln ($L_{LR}$) durch eine gekoppelte Strombegrenzungsdrossel ($L'_{LR}$) gebildet sind.

7. Schweißstromquelle (1) nach einem der Ansprüche 1 bis 6, **dadurch gekennzeichnet, dass** die Kapazität ($C_B$) am Ausgang (2) durch zumindest zwei Kondensatoren ($C_{B1}$, $C_{B2}$) gegen Erde gebildet ist.

8. Schweißstromquelle (1) nach einem der Ansprüche 1 bis 7, **dadurch gekennzeichnet, dass** die Kapazität ($C_B$) am Ausgang (2) zumindest 10nF beträgt.

9. Schweißstromquelle (1) nach einem der Ansprüche 1 bis 8, **dadurch gekennzeichnet, dass** die Strombegrenzungsdrossel ($L_{LR}$) eine Induktivität zwischen einem Fünftel des Betrags der reziproken Schaltfrequenz ($f_S$) und dem fünffachen Betrag der reziproken Schaltfrequenz ($f_S$) aufweist.

10. Schweißstromquelle (1) nach einem der Ansprüche 1 bis 9, **dadurch gekennzeichnet, dass** die Windungszahl ($N_3$) der zweiten Sekundärwicklung (8) zumindest doppelt so groß wie die Windungszahl ($N_2$) der ersten Sekundärwicklung (7) des Transformators (5) ist.

11. Schweißstromquelle (1) nach einem der Ansprüche 1 bis 10, **dadurch gekennzeichnet, dass** die über die zweite Sekundärwicklung (8) übertragbare Leistung ($P_{3max}$) größer 250W, vorzugsweise größer 500W ist.

12. Schweißstromquelle (1) nach einem der Ansprüche 1 bis 11, **dadurch gekennzeichnet, dass** die Schaltfrequenz ($f_S$) zwischen 20kHz und 200kHz, vorzugsweise zwischen 40kHz und 120kHz beträgt.

13. Schweißstromquelle (1) nach einem der Ansprüche 1 bis 12, **dadurch gekennzeichnet, dass** der Maximalwert der Leerlaufspannung ($U_{LL}$) am Ausgang (2) zwischen 90V und 113V DC beträgt.

**Claims**

1. A welding current source (1) for supplying of a welding current (I) and a welding voltage (U) at an output (2) for the performance of an arc welding process, with an input-side rectifier (3), an inverter (4) operated at a switching frequency ($f_S$), a transformer (5) with a primary winding (6) and at least two secondary windings (7, 8), at least two rectifiers (9, 10) arranged between the secondary windings (7, 8) and the output (2), and at least one capacitor ($C_B$) and one load resistor ($R_B$) at the output (2), **characterised in that** at least one current-limiting inductor ($L_{LR}$) is arranged on the second secondary winding (8), and the load resistor ($R_B$) for discharging the capacitor ($C_B$) that can be charged via the current-limiting inductor ($L_{LR}$), the current-limiting inductor ($L_{LR}$), and the capacitor ($C_B$), are dimensioned such that the maximum value of the no-load voltage ($U_{LL}$) at the output (2) is greater than the voltage ($U_3$) corresponding to the transmission ratio of the primary winding (6) to the second secondary winding (8) of the transformer (5).

2. The welding current source (1) in accordance with claim 1, **characterised in that** the maximum value of the no-load voltage ($U_{LL}$) at the output (2) is 5% to 30% higher than the voltage ($U_3$) corresponding to the transmission ratio of the primary winding (6) to the second secondary winding (8) of the transformer (5).

3. The welding current source (1) in accordance with claim 1 or 2, **characterised in that** the load resistor ($R_B$) at the output (2) is dimensioned such that the time constant ($T_{RC}$) of the RC-element consisting of the said load resistor ($R_B$) and the capacitor ($C_B$) at the output (2) is between 1 and 20 times the reciprocal of the switching frequency ($f_S$) of the inverter (4).

4. The welding current source (1) in accordance with one of the claims 1 to 3, **characterised in that** the resonant frequency ($f_{02}$) of the resonant circuit consisting of the current-limiting inductor ($L_{LR}$) and capacitor ($C_B$) at the output (2) is between 3 times and 20 times the switching frequency ($f_S$) of the inverter (4).

5. The welding current source (1) in accordance with one of the claims 1 to 4, **characterised in that** the second secondary winding (8) of the transformer (5) has a centre tapping (12), and the terminal connections of the second secondary winding (8) of the transformer (5) are each connected to a current-limiting inductor ($L_{LR}$).

6. The welding current source (1) in accordance with claim 5, **characterised in that** the two current-limiting inductors ($L_{LR}$) are formed by a coupled current-limiting inductor ($L'_{LR}$).

7. The welding current source (1) in accordance with one of the claims 1 to 6, **characterised in that** the capacitor ($C_B$) at the output (2) is formed by at least two capacitors ($C_{B1}$, $C_{B2}$) connected to ground.

8. The welding current source (1) in accordance with one of the claims 1 to 7, **characterised in that** the capacitor ($C_B$) at the output (2) is at least 10nF.

9. The welding current source (1) in accordance with one of the claims 1 to 8, **characterised in that** the current-limiting inductor ($L_{LR}$) has an inductance between one fifth of the figure of the reciprocal of the switching frequency ($f_S$) and five times the figure of the reciprocal of the switching frequency ($f_S$).

10. The welding current source (1) in accordance with one of the claims 1 to 9, **characterised in that** the number of turns ($N_3$) of the second secondary winding (8) is at least twice as large as the number of turns ($N_2$) of the first secondary winding (7) of the transformer (5).

11. The welding current source (1) in accordance with one of the claims 1 to 10, **characterised in that** the power ($P_{3max}$) that can be transmitted via the second secondary winding (8) is greater than 250W, preferably greater than 500W.

12. The welding current source (1) in accordance with one of the claims 1 to 11, **characterised in that** the switching frequency ($f_S$) is between 20kHz and 200kHz, preferably between 40 kHz and 120 kHz.

13. The welding current source (1) in accordance with one of the claims 1 to 12, **characterised in that** the maximum no-load voltage ($U_{LL}$) at the output (2) is between 90V and 113V DC.

## Revendications

1. Source de courant de soudure (1) pour la mise à disposition d'un courant de soudure (I) et d'une tension de soudure (U) au niveau d'une sortie (2) pour l'exécution d'un procédé de soudure à arc électrique, avec un redresseur (3) côté entrée, un inverseur (4) fonctionnant avec une fréquence de commutation (fs), un transformateur (5) avec un enroulement primaire (6) et au moins deux enroulements secondaires (7, 8), au moins deux redresseurs (9, 10) disposés entre les enroulements secondaires (7, 8) et la sortie (2) et au moins une capacité ($C_B$) et une résistance de charge ($R_B$) au niveau de la sortie (2), **caractérisée en ce que**, au niveau du deuxième enroulement primaire (8), est disposée au moins une bobine de limitation de courant ($L_{LR}$) et la résistance de charge ($R_B$), pour la décharge de la capacité ($C_B$) pouvant être chargée par l'intermédiaire de la bobine de limitation de courant ($L_{LR}$), la bobine de limitation de courant ($L_{LR}$) et la capacité ($C_B$) sont dimensionnées de façon à ce que la valeur maximale de la tension à vide ($U_{LL}$) au niveau de la sortie (2) soit supérieure à la tension ($U_3$) correspondant au rapport de démultiplication entre l'enroulement primaire (6) et le deuxième enroulement secondaire (8) du transformateur (5).

2. Source de courant de soudure (1) selon la revendication 1, **caractérisée en ce que** la valeur maximale de la tension à vide ($U_{LL}$) au niveau de la sortie est supérieure de 5 % à 30 % à la tension ($U_3$) correspondant au rapport de démultiplication entre l'enroulement primaire (6) et le deuxième enroulement secondaire (8) du transformateur (5).

3. Source de courant de soudure (1) selon la revendication 1 ou 2, **caractérisée en ce que** la résistance de charge ($R_B$) au niveau de la sortie (2) est dimensionnée de façon à ce que la constante de temps ($T_{RC}$) du circuit RC constitué de cette résistance de charge ($R_B$) et de la capacité ($C_B$), au niveau de la sortie (2), représente entre 1 fois et 20 fois la fréquence de commutation (fs) réciproque de l'inverseur (4).

4. Source de courant de soudure (1) selon l'une des revendications 1 à 3, **caractérisée en ce que** la fréquence de résonance ($f_{02}$) du circuit oscillant constitué de la bobine de limitation de courant ($L_{LR}$) et de la capacité ($C_B$) au niveau de la sortie (2) représente entre 3 fois et 20 fois la fréquence de commutation (fs) de l'inverseur (4).

5. Source de courant de soudure (1) selon l'une des revendications 1 à 4, **caractérisée en ce que** le deuxième enroulement secondaire (8) du transformateur (5) comprend une prise centrale (12) et les bornes du deuxième enroulement secondaire (8) du transformateur (5) sont reliées chacune avec une bobine de limitation de courant ($L_{LR}$).

6. Source de courant de soudure (1) selon la revendication 5, **caractérisée en ce que** les deux bobines de limitation de courant ($L_{LR}$) sont constituées d'une bobine de limitation de courant couplée ($L'_{LR}$).

7. Source de courant de soudure (1) selon l'une des revendications 1 à 6, **caractérisée en ce que** la capacité ($C_B$) au niveau de la sortie (2) est constitué d'au moins deux condensateurs ($C_{B1}$, $C_{B2}$) contre la terre.

8. Source de courant de soudure (1) selon l'une des revendications 1 à 7, **caractérisée en ce que** la capacité ($C_B$) est égale à au moins 10 nF.

9. Source de courant de soudure (1) selon l'une des revendications 1 à 8, **caractérisée en ce que** la bobine de limitation de courant ($L_{LR}$) présente une inductance entre le cinquième de la valeur de la fréquence de commutation réciproque (fs) et le quintuple de la valeur de la fréquence de commutation réciproque (fs).

10. Source de courant de soudure (1) selon l'une des revendications 1 à 9, **caractérisée en ce que** le nombre d'enroulements ($N_3$) du deuxième enroulement secondaire (8) est au moins le double du nombre d'enroulements ($N_2$) du premier enroulement secondaire (7) du transformateur (5).

11. Source de courant de soudure (1) selon l'une des revendications 1 à 10, **caractérisée en ce que** la puissance ($P_{3max}$) pouvant être transmise par l'intermédiaire du deuxième enroulement secondaire (8) est supérieure à 250 W de préférence supérieure à, 500 W.

12. Source de courant de soudure (1) selon l'une des revendications 1 à 11, **caractérisée en ce que** la fréquence de commutation (fs) est entre 20 kHz et 200 kHz, de préférence entre 40 kHz et 120 kHz.

13. Source de courant de soudure (1) selon l'une des revendications 1 à 12, **caractérisée en ce que** la valeur maximale de la tension à vide ($U_{LL}$) au niveau de la sortie (2) est entre 90 V et 113 V DC.

Fig.1

# Fig.2

Fig.3

# Fig.4

Fig.5

# Fig.6

Fig.7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2004119572 A1